# EUROPEAN PATENT APPLICATION

(11) **EP 2 006 159 A1**
(43) Date of publication of application: **24.12.2008**
(21) Application number: 07381047.5
(22) Date of filing: 19.06.2007
(51) Int. Cl.: B60R 13/02

(54) **Method for determining the adaptability of lining materials for vehicle components**

(71) Applicant: Dalphi Metal España, S.A., 28006 Madrid (ES)
(72) Inventor: Pérez Blanco, María Mónica, 36213, Vigo, Pontevedra (ES); Blanco Fernández, Jorge Juan, 36213, Vigo, Pontevedra (ES); Fernández Pintelos, Francisco, 36213 Vigo, Pontevedra (ES)
(74) Representative: Elzaburu Marquez, Alberto

(57) **Abstract**

The invention relates to a method for determining the adaptability of lining materials for automotive vehicle components, which materials are joined thereto by means of an adhesive, comprising the following steps: obtaining samples (13) of the material with several diameters Dmi; providing disc-shaped jigs (11) with a central recessed area (15) and an intermediate area (17), the diameter Dz of the latter being greater than the diameters Dmi, and such diameters Dmi being smaller than the diameter Dc of the central recessed area (15); applying said adhesive to the samples (13) and the jigs (1) and placing the samples (13) on the jigs (11) inside Lhe intermediate area (17); detecting the presence or absence of creases in the samples (13); determining the adaptability according to the difference of the diameter Dmi of the samples (13) that do not have creases with respect to the diameter Dc of the central recessed area (15).

## Description

### Field of the Invention

The present invention relates to a method for determining the adaptability of lining materials for steering wheels and other automotive vehicle components, which materials are applied by means of adhesives.

### Background of the Invention

The processes for lining steering wheels and other automotive vehicle components which use adhesives in the operation for placing the lining on the component usually have quality problems because the occurrence of unwanted creases is not unusual as a result of the complexity of the surfaces to be lined.

In addition, the materials used to line steering wheels and particularly hides do not have uniform properties, which contributes to making it difficult to predict their behavior during said lining processes.

The automotive industry therefore demands methods for determining the adaptability of materials which allow improving the processes for lining steering wheels and other automotive vehicle components.

No method to that effect has been described in the prior art known by the applicant and the present invention is aimed at satisfying said need.

### Summary of the Invention

An objective of the present invention is to provide a method for determining the adaptability of lining materials for automotive vehicle components having complex surfaces, which materials are joined thereto by means of adhesives, which method allows obtaining representative determinations of the real adaptation behavior of said materials which takes place during the lining process.

Another objective of the present invention is to provide a method for determining the adaptability of lining materials for automotive vehicle components having complex surfaces, which materials are joined thereto by means of adhesives, which method allows predicting whether the material will or will not have difficulties during the lining process.

These and other objectives are achieved by providing a method for determining the adaptability of lining materials for automotive vehicle components, which materials are joined thereto by means of a certain adhesive, which method comprises the following steps.
- Obtaining circular samples of the lining material with several diameters Dmi.
- Providing jigs with a central recessed area having a circular base, an intermediate area having an annulus-shaped base and an outer area having a raised edge with respect to the intermediate area, the diameter Dz of the intermediate area being greater than the diameters Dmi of said samples and the diameter Dc of the central recessed area being smaller than the diameters Dmi of said samples and the height H of the recess of the central area being slightly greater than the thickness of the material.
- Applying said adhesive to the samples and the jigs, placing the samples on the jigs such that they are inside the intermediate area and join them to such jigs, firstly pressing on the part located on the intermediate area and secondly on the part located on the central recessed area.
- Detecting the presence or absence of creases in the samples.
- Determining the adaptability of the material according to the difference of the diameter Dmi of the samples that do not have creases with respect to the diameter Dc of central area.

In a preferred embodiment of the invention, the material is leather and it is used to line automotive vehicle steering wheels.

Other features and advantages of the present invention will be understood from the following detailed description of an illustrative and by no means limiting embodiment of its object in relation to the attached drawings.

### Description of the Drawings

Figures 1a, 1b and 1c are cross-sectional, plan and perspective views of the jig used in the method for determining the adaptability of lining materials for automotive vehicle components according to the present invention.
Figures 2a to 2f show the fundamental steps of the method for determining the adaptability of lining materials for automotive vehicle components according to the present invention.

### Detailed Description of the Invention

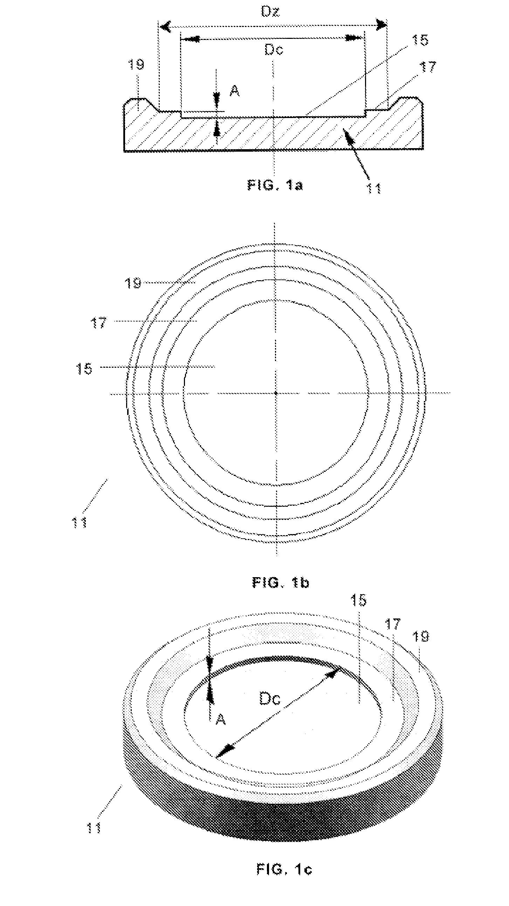

According to Figures 1a, 1b and 1c, it is observed that the jig 11 used in a preferred embodiment of the present invention is disc-shaped having a central recessed area 15 having a circular base, an intermediate area 17 having an annulus-shaped base and an outer area 19 forming a raised edge with respect to the intermediate area.

For its part, in a preferred embodiment, the method for determining the adaptability of lining materials for automotive vehicle components according to the present invention comprises the steps described below.

The samples 13 of the material and the jigs 11 are supplied first. Several circular samples 13 having different diameters Dmi are provided, which are obtained by cutting a piece of the material the adaptability of which is to be determined with a cutter.

The diameters Dmi of the samples 13 must be comprised between the diameter Dc of the central recessed area 15 and the diameter Dz of the intermediate area 17. For its part, the height H of the recess of the central area 15 must be slightly greater than the thickness of the samples 13 of the material.

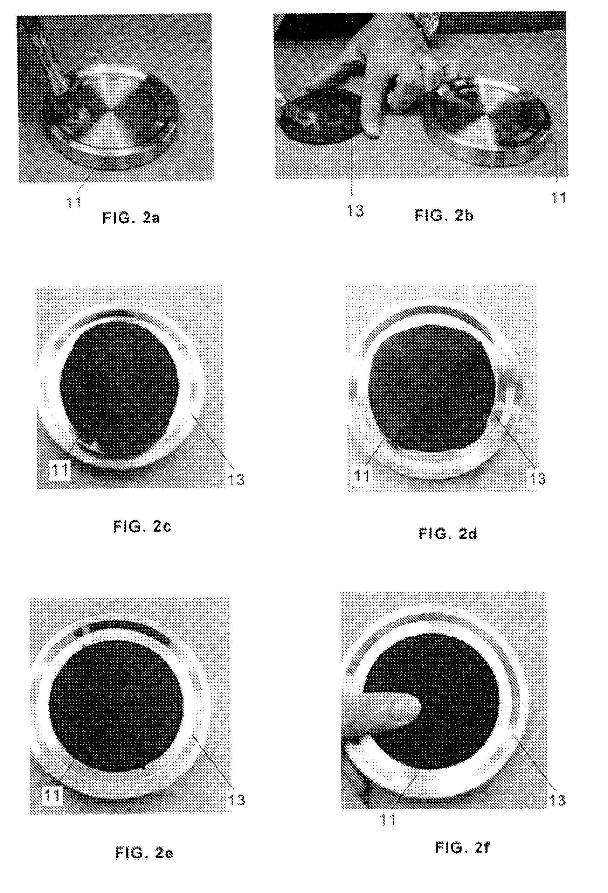

The following process is used for each sample 13:
- A small amount of adhesive is applied in the jig 11 and in the sample 13 (on the face which would be adhered to the vehicle component) and the adhesive solvents are allowed to dry slightly without such adhesive being completely dried (Figures 2a and 2b).
- The sample 13 is placed on the jig 11, making contact at two opposite points, the material being housed against the corresponding walls of the recessed area 15 (Figure 2c).
- The operation is repeated at two opposite points located at 90° from the previous points (Figure 2d).
- The rest of the sample 13 is placed on the jig 11, ensuring that the material is well adapted to the recessed area 15 (Figure 2e).
- Since the diameter of the sample 13 is greater than the diameter Dc of the central recessed area 15 of the jig 11, the sample 13 tends to be lifted at the center, therefore it must be pressed at the center, attempting to adapt it to the available surface in the jig, adhering it with the fingers to the central recessed area 15 in its entire surface and ensuring that the surface of the material is completely smooth.

After the previous process, it is detected whether or not the samples 13 have creases and the adaptability of the material is determined according to the difference of the diameter Dmi of the samples 13 that do not have creases with respect to the diameter Dc of the central recessed area 15.

In this sense, a visual acceptance criterion by attributes is established for each type of material (hide or another covering). This criterion is established in early stages by means of verifying correct samples and incorrect samples according to the presence/absence of creases, the correctness of the samples being identified according to the geometry of the component to be lined and the lining material.

By acknowledging that there is a minimum diameter of the sample for a jig having a certain diameter so that such sample is free of creases upon conducting the test, and that it in reality it produces good parts as regards creases (only a slight grain alteration is admissible), another greater diameter of jig/sample could be established to set a greater margin, which would allow a greater working margin.

In a preferred embodiment of the invention, a number of samples 13 comprised between 2 and 5 is used, and the difference between the diameter Dmi of the samples 13 and the diameter Dc of the central recessed area 15 is comprised between 0 and 6 mm.

In another preferred embodiment of the invention in relation to lining steering wheels with hides, the jigs 11 have a diameter Dc of the central recessed area of 70 mm and the samples 13 have diameters Dmi comprised between 71 and 76 mm. As already stated, the adaptability of the material is determined according to the greatest diameter of the sample which does not have creases. Thus, for example, the material is not considered to be acceptable if only samples having a diameter smaller than 72 mm do not have creases, and it is considered to be acceptable in the opposite case. For its part, the adaptability is better the larger the diameters of the samples without creases, such that if all the samples do not have creases the material would have an "excellent" adaptability, whereas if the sample having a diameter of 73 mm did not have creases but the samples having a diameter of 74 to 76 mm did have creases the material would simply have an "acceptable" adaptability.

An advantage of the method for determining the adaptability of lining materials for automotive vehicle components according to the present invention is that it allows establishing target acceptability criteria for the material, thus facilitating the relationships between the manufacturers and the users of the material.

Another advantage of the method for determining the adaptability of lining materials for automotive vehicle components according to the present invention is that it allows easily documenting its implementation by photographing the results of the relevant steps thereof for example.

Although several embodiments of the invention have been described and shown, it is evident that modifications comprised within the scope of the invention can be introduced therein, such invention must not be considered as limited to said embodiments but to the content of the following claims:

## Claims

1. A method for determining the adaptability of lining materials for automotive vehicle components, which materials are joined thereto by means of an adhesive, **characterized in that** it comprises the following steps:
a) obtaining circular samples (13) of the lining material with several diameters Dmi;
b) providing jigs (11) with a central recessed area (15) having a circular base, an intermediate area (17) having an annulus-shaped base and an outer area (19) having a raised edge with respect to the intermediate area (17), the diameter Dz of the intermediate area (17) being greater than the diameters Dmi of said samples (13) and the diameter Dc of the central recessed area (15) being smaller than the diameters Dmi of said samples (13) and the height H of the recess of the central recessed area (15) being slightly greater than the thickness of the samples (13);
c) applying said adhesive to the samples (13) and the jigs (1), placing the samples (13) on the jigs (11) such that they are inside the intermediate area (17) and join them to such jigs, firstly pressing on the part located on the intermediate area (17) and secondly on the part located on the central recessed area (15);
d) detecting the presence or absence of creases in the samples (13);
e) determining the adaptability of the material according to the difference of the diameter Dmi of the samples (13) that do not have creases with respect to the diameter Dc of the central recessed area (15).

2. A method for determining the adaptability of lining materials for automotive vehicle components, which materials are joined thereto by means of a certain adhesive according to claim 1, **characterized in that** a number of samples (13) comprised between 2 and 6 is used, and **in that** the difference between the diameter Dmi of the samples (13) and the diameter Dc of the central recessed area (15) of the jigs (11) is comprised between 0 and 6 mm.

3. A method for determining the adaptability of lining materials for automotive vehicle components, which materials are joined thereto by means of a certain adhesive according to claim 2, **characterized in that** the diameter Dc of the central recessed area (15) is 70 mm.

4. A method for determining the adaptability of lining materials for automotive vehicle components, which materials are joined thereto by means of a certain adhesive according to any of claims 1-3, **characterized in that** the vehicle component which is lined is the steering wheel.

5. A method for determining the adaptability of lining materials for automotive vehicle components, which materials are joined thereto by means of a certain adhesive according to any of claims 1-4, **characterized in that** the material is leather.
